# EUROPEAN PATENT APPLICATION

(11) **EP 4 322 440 A1**
(43) Date of publication of application: **14.02.2024**
(21) Application number: 22189770.5
(22) Date of filing: 10.08.2022
(51) Int. Cl.: H04L 1/1829

(54) **USER EQUIPMENT AND SCHEDULING DEVICE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

Some exemplary embodiments relate to a user equipment, UE, a scheduling device and respective methods for a UE and a scheduling device. For example, the UE comprises a transceiver which, in operation, receives a resource configuration indicating periodic downlink resources, wherein each downlink resource is associated with a respective first resource of a physical uplink control channel, PUCCH, for transmission of an acknowledgement report, receives a resource indicator for determining a second resource for transmission of the acknowledgement report, and receives data via one of the downlink resources. The UE, for example, further comprises circuitry which, in operation, determines the second resource, using the resource indicator, and determines, from among the first resource associated with the one of the downlink resources and the second resource, the resource to be used for transmission of the acknowledgment report, wherein the transceiver, in operation, transmits the acknowledgement report via the resource determined by the circuitry.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates increasing the efficiency of resource usage, in particular in scenarios with periodic traffic.

In an embodiment, the techniques disclosed here feature a user equipment, UE. The UE comprises a transceiver that, in operation, receives a resource configuration indicating periodic downlink resources, wherein each downlink resource is associated with a respective first resource of a physical uplink control channel, PUCCH, for transmission of an acknowledgement report, receives a resource indicator for determining a second resource for transmission of the acknowledgement report, and receives data via one of the downlink resources. The UE further comprises circuitry which, in operation, determines the second resource, using the resource indicator, and determines, from among the first resource associated with the one of the downlink resources and the second resource, the resource to be used for transmission of the acknowledgment report, wherein the transceiver, in operation, transmits the acknowledgement report via the resource determined by the circuitry.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6**: illustrates an example of SPS and CG configurations for simultaneous DL and UL data streams.
- **Fig. 7**: illustrates a general, simplified and exemplary block diagram of a user and a scheduling device.
- **Fig. 8**: shows an exemplary functional structure of the acknowledgement report resource determination circuitry.
- **Fig. 9**: illustrates an exemplary functional structure of the scheduling circuitry.
- **Fig. 10**: illustrates methods performed by a user equipment and a scheduling device.
- **Fig. 11**: illustrates a process for transmitting an acknowledgement report according to an exemplary first embodiment.
- **Fig. 12**: illustrates a process for transmitting an acknowledgement report according to an exemplary second embodiment.
- **Fig. 13**: illustrates a process for transmitting an acknowledgement report according to an exemplary third embodiment.
- **Fig. 14**: illustrates a process for transmitting an acknowledgement report according to a variation of the exemplary third embodiment.
- **Fig. 15**: illustrates a process for transmitting an acknowledgement report according to an exemplary fourth embodiment
- **Fig. 16**: illustrates a flowchart of a method performed by a UE 100 according to the fourth embodiment.
- **Fig. 17**: illustrates a process for transmitting an acknowledgement report according to an exemplary fifth embodiment.
- **Fig .18**: illustrates a process for transmitting an acknowledgement report according to a variation of the exemplary fifth embodiment.
- **Fig. 19**: illustrates a process for transmitting an acknowledgement report according to a further variation of the exemplary fifth embodiment.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

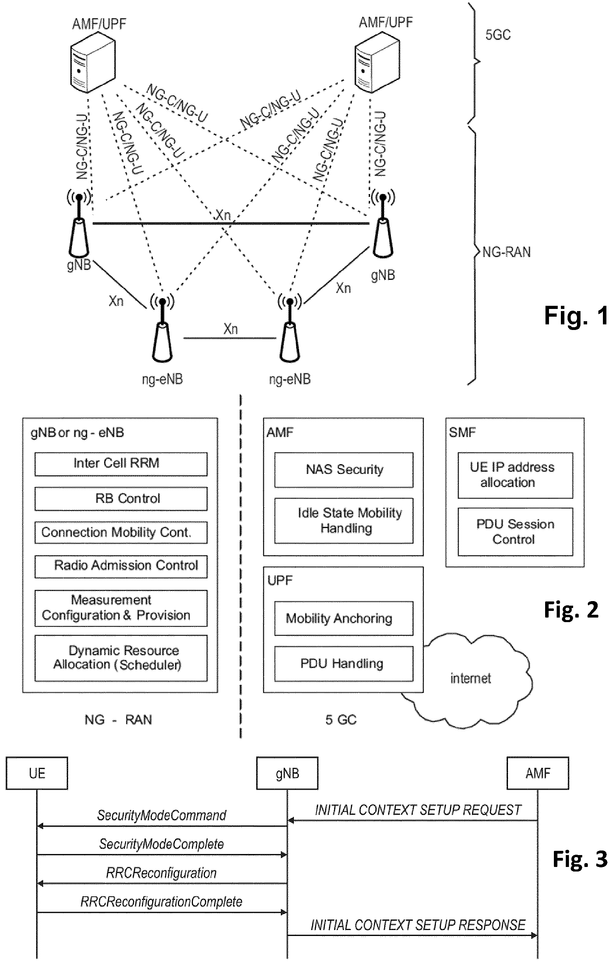

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10-5 within 1ms). Finally, mMTC may preferably require high connection density (1,000,000 devices/km2 in an urban environment), large coverage in harsh environments, and extremely long-life battery for low-cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tu and the subcarrier spacing Δf are directly related through the formula Δf = 1 / Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS38.211 e.g. v17.1.0, e.g. section 4). For instance, downlink and uplink transmissions are organized into frames with 10ms duration, each frame consisting of ten subframes of respectively 1ms duration. In 5G NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

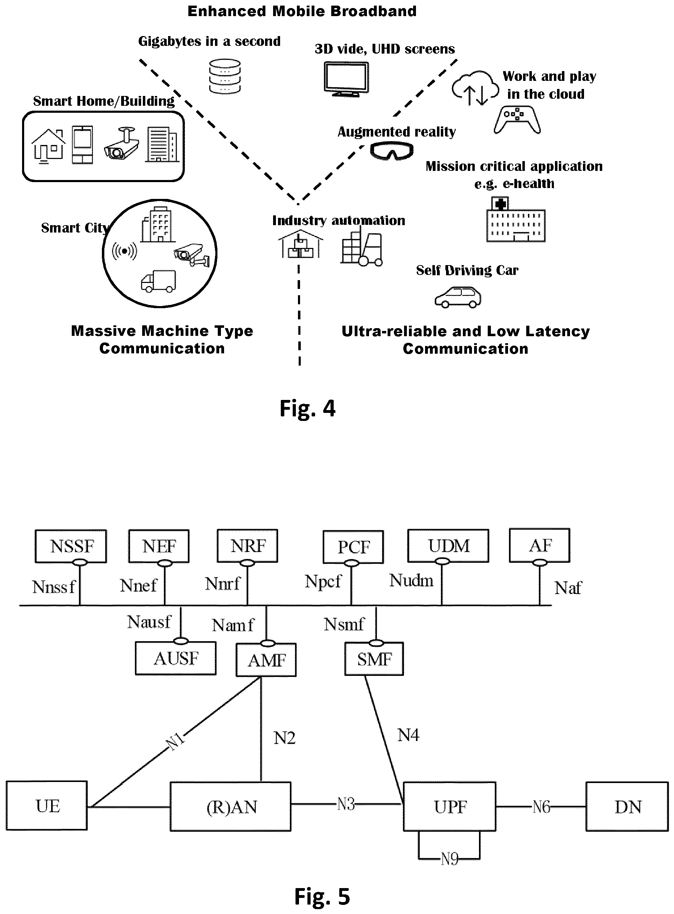

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Oownlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Control information - Search space sets

PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In an exemplary 5G NR compliant implementation, there are a number of different DCI formats defined already (see TS 38.212 e.g. v17.1.0 section 7.3.1). An overview is given by the following table.

| **DCI format** | **Usage** |
|---|---|
| 0 0 | Scheduling of PUSCH in one cell |
| 0 1 | Scheduling of PUSCH in one cell |
| 0 2 | Scheduling of PUSCH in one cell |
| 1_0 | Scheduling of PDSCH in one cell |
| 1_1 | Scheduling of PDSCH in one cell |
| 1_2 | Scheduling of PDSCH in one cell |
| 2 0 | Notifying a group of UEs of the slot format |
| 2_1 | Notifying a group of UEs of the PRB(s) and OFDM symbol(s) where UE may assume no transmission is intended for the UE |
| 2 2 | Transmission of TPC commands for PUCCH and PUSCH |
| 2_3 | Transmission of a group of TPC commands for SRS transmissions by one or more UEs |
| 2 4 | Cancel UL transmission |
| 2 5 | Notify availability of soft resources |
| 2 6 | Notify power saving information |
| 3 0 | Scheduling for Sidelink, NR PSCCH and NR PSSCH in one cell; |
| 3_1 | Scheduling for Sidelink; LTE PSCCH and LTE PSSCH in one cell |

In 5G NR, PDCCH is transmitted in radio resource regions called control resource sets (CORESETs). In LTE, the concept of a CORESET is not explicitly present. Instead, PDCCH in LTE uses the full carrier bandwidth in the first 1-3 OFDM symbols (four for the most narrowband case). By contrast, a CORESET in 5G NR can occur at any position within a slot and anywhere in the frequency range of the carrier, except that the UE is not expected to handle CORESETs outside its active bandwidth part (BWP).

Accordingly, a UE performs a monitoring operation of the PDCCH, e.g. as defined in 3GPP TS 38.213 e.g. version 17.1.0, sections 10 and 11. As exemplarily defined therein, the UE monitors a set of PDCCH candidates, which is defined in terms of PDCCH search space sets. A search space set can be a common search space set (CSS set) or a UE-specific search space set (USS set).

As defined exemplarily by 3GPP TS 38.213, section 10.1, a UE monitors PDCCH candidates in one or more of the following CSS and USS sets:
- a Type0-PDCCH CSS set configured by *pdcch-ConfigSIB1* in *MIB* or by *searchSpaceSIB1* in *PDCCH-ConfigCommon* or by *searchSpaceZero* in *PDCCH-ConfigCommon* for a DCI format with CRC scrambled by a SI-RNTI on the primary cell of the MCG
- a Type0A-PDCCH CSS set configured by *searchSpaceOtherSystemInformation* in *PDCCH-ConfigCommon* for a DCI format with CRC scrambled by a SI-RNTI on the primary cell of the MCG
- a Type1-PDCCH CSS set configured by *ra-SearchSpace* in *PDCCH-ConfigCommon* for a DCI format with CRC scrambled by a RA-RNTI, a MsgB-RNTI, or a TC-RNTI on the primary cell
- a Type2-PDCCH CSS set configured by *paging Search Space* in *PDCCH-ConfigCommon* for a DCI format with CRC scrambled by a P-RNTI on the primary cell of the MCG
- a Type3-PDCCH CSS set configured by *SearchSpace* in *PDCCH-Config* with *searchSpaceType = common* for DCI formats with CRC scrambled by INT-RNTI, SFI-RNTI, TPC-PUSCH-RNTI, TPC-PUCCH-RNTI, TPC-SRS-RNTI, or CI-RNTI and, only for the primary cell, C-RNTI, MCS-C-RNTI, CS-RNTI(s), or PS-RNTI and
- a USS set configured by *SearchSpace* in *PDCCH-Config* with *searchSpaceType = ue-Specific* for DCI formats with CRC scrambled by C-RNTI, MCS-C-RNTI, SP-CSI-RNTI, CS-RNTI(s), SL-RNTI, SL-CS-RNTI, or SL Semi-Persistent Scheduling V-RNTI.

Search space sets are monitored in one or more CORESETs on the active DL BWP on each activated serving cell configured with PDCCH monitoring using the corresponding search space sets, where monitoring implies decoding each PDCCH candidate according to the monitored DCI formats.

### Physical Resource Block

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Time-domain in 5G NR

In the time domain, transmissions in 5G NR are organized into frames of length 10ms, each of which is divided into 10 equally sized subframes of length 1ms. A subframe in turn is divided into one or more slots consisting of 14 OFDM symbols each. The duration of a slot in milliseconds depends on the numerology. For instance, for the 15 kHz subcarrier spacing, an NR slot thus has the same structure as an LTE subframe with normal cyclic prefix. A subframe in 5G NR serves as a numerology-independent time reference, which is useful, especially in the case of multiple numerologies being mixed on the same carrier, while a slot is the typical dynamic scheduling unit.

5G NR provides a plurality of slot formats, and a slot format indicates how each of the symbols within a single slot is used. It defines which symbols within a specific slot are used for uplink and which symbols are used for downlink. In LTE TDD, if a subframe (equivalent to a slot in NR) is configured for DL or UL, all of the symbols within the subframe should be used as DL or UL. But in NR, each of the symbols within a slot can be configured differently as DL or UL. Also flexible symbols exist, which can be configured as DL or UL. In the exemplary 5G NR compliant implementation, the gNB uses a slot format indicator (SFI) to inform the UE about the slot format to be used (see also TS 38.213 v16.7.0 section 11.1.1). For instance, the slot format indicator includes an index value, associated with a slot format (e.g. in the form of a table).

### Uplink Control Information in 5G NR and Scheduling Requests

Whereas Downlink Control Information is carried by the PDCCH (see above explanation), Uplink Control Information (UCI) can be transmitted on the PUCCH or the PUSCH depending on the situation. Uplink control information can be the channel state information (CSI), the ACK/NACK information and scheduling requests. Not all of these need to be carried by a single PUCCH transmission. For instance, the CSI may be carried alone, or the ACK/NACK may be carried alone, or the SR may be carried alone, or the CSI and ACK/NACK are transmitted together in a PUCCH etc.

There is a plurality of different PUCCH formats that can be used for transmitting the UCI, presently there are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used, as exemplary illustrated in the following table (see e.g. 3GPP TS 38.211 e.g. v17.1.0, section 6.3.2).

The UCI can be transmitted on the PUCCH flexibly in the time and frequency domain using specifically assigned radio resources, e.g. PUCCH resource sets. A UE can be configured with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH - Config information element (see e.g. 3GPP TS 38.331 e.g. v16.7.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1.

The current reporting of the UCI in the PUCCH is defined in 3GPP TS 38.213 e.g. v17.1.0, section 9.2.

A PUCCH resource may include one or more of the following parameters.
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. v17.1.0, section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the SchedulingRequestConfig information element and the SchedulingRequestResourceConfig information element (see e.g. 3GPP TS 38.331 v16.7.0, such as section 6.3.2).

In brief, the scheduling request is basically a flag raised by the user equipment to request uplink resources from the uplink scheduler at the base station. Since the device requesting the resources has no PUSCH resource available, the scheduling request is transmitted on the PUCCH using the preconfigured and periodically reoccurring PUCCH resources dedicated to the UE. The serving base station can then assign radio resources to the user equipment.

Unlike LTE, 5G NR supports configuration of multiple scheduling requests from a single device. A logical channel can be mapped to zero or more scheduling request configurations. This provides the gNB not only with information that there is data awaiting for transmission in the device, but also what type of data is awaiting for transmission. This can be useful information for the gNB to consider the various traffic types 5G NR is designed to support. For example, the gNB may want to schedule a user equipment for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, i.e. in the case of multiple logical channels having data to transmit, one exemplary behavior is to trigger the scheduling request corresponding to the highest-priority logical channel. It can only request in repeated and subsequent resources, up to a configurable limit, until a grant is received from gNB. It is also possible to configure a Prohibit timer, controlling how often a scheduling request can be transmitted. In the case of multiple scheduling request resources, both of these configurations are done as per scheduling request resource.

### SPS in downlink and Configured grant in uplink

In the downlink, the gNB can dynamically allocate resources to UEs via the C-RNTI on PDCCH(s) (see e.g. DCIs above). Similarly, in the uplink, the gNB can dynamically allocate resources to UEs via the C-RNTI on PDCCH(s) (see e.g. DCIs above). In addition to dynamically allocating downlink resources and uplink resources, 5G NR also provides scheduling enhancements according to which resource allocation can be implemented in 5G NR based on semi-persistent scheduling (SPS) in the downlink and based on a configured grant (CG) in the uplink.

In the downlink, semi-persistent-scheduling (SPS) functionality was adopted in 5G NR as a further development of SPS as used for the previous communication system of LTE, in which it is applicable for both uplink and downlink. Furthermore, in LTE, the SPS configuration is typically dedicated to a single device. If the device does not need the allocated periodic resources (e.g. data is only transmitted for specific events, such as a collision warning), the SPS resources that are no used by the UE are wasted.

According to one 5G NR compliant example implementation, the RRC defines the relevant parameters for SPS. An RRC information element SPS-Config is defined in 3GPP 38.331 e.g. V16.7.0 for configuring the downlink semi-persistent transmission. For instance, the RRC defines the periodicity of the configured downlink assignments, the number of HARQ processes, MCS, etc.

Different periodicities are supported for DL SPS, e.g. common for all Subcarrier Spacings (SCS) or depending on the Subcarrier spacings. One example of the currently defined periodicities in TS 38.331, when being dependent on SCS, are presented in the following:
- For SCS of 15 KHz: {1, 2, 3..., 640} ms
- For SCS of 30 KHz: 0.5 x {1, 2, 3..., 1280} ms
- For SCS of 60 KHz: 0.25 x {1, 2, 3..., 2560} ms
- For SCS of 120 KHz: 0.125 x{1, 2, 3..., 5120} ms

The UE may be configured with several (e.g. up to 8) active configured downlink assignments for one BWP of a serving cell. When more than one is configured:
- The network decides which of these configured downlink assignments are active at a time (including all of them); and
- Each configured downlink assignment is activated separately using a DCI command, and deactivation of configured downlink assignments is done using a DCI command, which can either deactivate a single configured downlink assignment or multiple configured downlink assignments jointly.

A PDCCH addressed to the CS-RNTI can either signal and activate the configured downlink assignments, while a PDCCH addressed to CS-RNTI can indicate that the downlink assignment can be implicitly reused according to the periodicity defined by RRC, until deactivated. When required, retransmissions are e.g. explicitly scheduled on PDCCH(s).

SPS is particularly useful for periodic downlink data transmissions such as Voice over IP (VoIP) services. A base station configures the SPS radio resources, and the UE can use these periodic radio resources, without additional DCI scheduling downlink resources.

Uplink data transmissions typically require resources being requested by the UE, followed by a packed scheduling decision and resource allocation at the scheduling side (e.g. base station). The allocation cycle causes an additional delay and signaling. The radio resource allocation delay between the UE and the base station can be avoided by allowing the UE to use radio resources without previously requesting same from the base station. This can be implemented by so-called configured grants (CG).

In addition, by using configured grants, multiple devices (UEs) may be allowed to share periodic radio resources (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16 and Release 17, namely Type 1 and Type 2 (see 3GPP 38.300 e.g.v16.8.0: "NR; NR and NG-RAN Overall Description; Stage 2 (Release 16)", section 10.3). According to this exemplary implementation of 3GPP TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called ConfiguredGrantConfig. (see 3GPP TS 38.331 v16.7.0, section 6.3.2 "Radio resource control information elements").

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

Retransmissions other than repetitions are explicitly allocated via PDCCH(s) or via configuration of a retransmission timer.

Different periodicities are supported for UL CG, which may depend on the Subcarrier spacings. One example of the currently defined periodicities in TS 38.331, when being dependent on SCS, are presented in the following:
- For SCS of 15 KHz: Multiple of 1 ms up to 640 ms, or multiple of 2 symbols (1/7 ms), or multiple of 7 symbols (0,5 ms)
- For SCS of 30 KHz: Multiple of 1/2 ms up to 640 ms, or multiple of 2 symbols (1/14 ms), or multiple of 7 symbols (0,25 ms)

### Acknowledgement reports - HARQ-ACK

5G NR supports Hybrid ARQ, which is a combination of retransmissions and error correction. Where possible, errors are corrected. Where correction is not possible, errors are detected and packet retransmission is requested. The receiver attempts to decode the packet based on current and previous transmissions.

The HARQ protocol is an implementation of a retransmission protocol used between the UE and the base station for the exchange of data. Retransmission protocols may for instance include different retransmission-protocol processes that operate separately for allowing the retransmission of data (possibly also the subsequent combination of the initially-transmitted data and the retransmitted data).

In 5G NR, HARQ operates at both MAC and PHY layers. Retransmissions occur at the MAC layer. PHY layer at the receiver combines one or more transmissions to increase the chances of correct decoding.

3GPP specification has defined HARQ Codebook to provide the feedback to base station for Downlink data transmission i.e., PDSCH Data, wherein the UE sends the ACK/NACK for a corresponding PDSCH transmission in PUSCH/PUCCH.

5G HARQ supports following features:
- Per Transport Block (TB), one bit is required for HARQ feedback
- Multiple HARQ process (up to 16) is supported per UE and there has to be separate feedback for each HARQ Process.
- In one PUSCH/PUCCH, UE can send feedback for multiple PDSCH reception
- The DCI format 1_0 and 1_1 includes timing information for HARQ feedback transmission and corresponding PDSCH reception

### XR - extended Reality in Rel. 18

A 3GPP study item relates to eXtended Reality (XR) in RAN 1 and RAN 2. The aim is to provide efficient communications for augmented reality (AR), virtual reality (VR), mixed reality (MR) and cloud gamin. In particular, techniques are studied for XR (eXtended Reality), e.g. to accommodate XR service characteristics, such as periodicity, multiple flows, jitter, latency, reliability, etc. The considered XR applications require a high data rate in downlink (DL) and uplink (UL) with a relatively strict packet delay budget (PDB).

Furthermore, some of the XR applications run on devices with a limited source of energy, such as wearable glasses or handheld devices. Thus, energy efficiency is an important concern.

The XR applications impose a variety of data traffics, including video streams. The video frames are quite large with varying sizes. They are characterized as quasi-periodic, because video frames arrive over a time window. In addition, the periodicity of the time window is non-integer regarding radio frame/slot/symbols.
- Packet size: For a high-quality video stream, the frame size would be around 1M bits after compression for an 8K video. This leads having large size packets.
- Varying size: The frame sizes could vary due to the I-frame or P-frame/B-frame.
- Periodicities: A video stream generally generates 60/90/120 FPS, which correspond to the periodicity of 16.667, 11.111, and 8.333 ms, respectively.
- Jitter: The frame packets would arrive at the gNB/UE over a time window of [-4, 4] ms or even a larger time window.
- Delay budget: The delay budget for delivering the XR packets could be tight, for instance, 10ms for AR/VR and 15ms for cloud gaming.

Further, control traffic may generate high data rates. For example, frames received by a UE may arrive at a rate of 250, wherein generated data could be 0.2 Mbps.

### UE power saving enhancements for NR

User experience is key to 5G/NR success, not only in terms of experienced data rates and latency but also importantly UE power consumption. UE Power saving enhancements are therefore vital to the success of 5G/NR. In Rel-16, several useful power saving schemes were specified, including power saving signal/DCI as enhancement to connected-mode DRX (cDRX), additional adaptations to maximum MIMO layer number, SCell dormancy behaviour and cross-slot scheduling as enhancements to BWP framework, RRM relaxation as enhancements for idle/inactive-mode power consumption, and UE assistance information.

In Rel-17, additional enhancements are required to address outstanding issues in Rel-16, including idle/inactive-mode power consumption in NR SA deployments, considering both eMBB UEs and Reduced Capability NR Devices, connected-mode power consumption with FR2 deployments, etc. One particular example is to study and specify extension(s) to Rel-16 DCI-based power saving adaptation during DRX Active Time for an active BWP, including PDCCH monitoring reduction when C-DRX is configured (RAN1).

Another power saving study item relates to XR-specific Power Saving in RAN 1 and RAN 2. In particular, power saving techniques are studied for XR (eXtended Reality), e.g. to accommodate XR service characteristics, such as periodicity, multiple flows, jitter, latency, reliability, etc. One technique could relate to enhancing PDCCH monitoring. A further study item relating to XR refers to XR-specific capacity improvements in RAN 1 and RAN 2, and involve studying mechanisms that provide more efficient resource allocation and scheduling for XR service characteristics, such as periodicity, multiple flows, jitter, latency, reliability, etc. Techniques could relate to SPS and CG enhancements and Dynamic scheduling/grant enhancements.

Energy saving can be implemented for the UE, including mechanisms for:
- a UE-specific BWP adaptation and use of a dormancy SCell (using DCI format 0_1 (for UL) and DCI format 1_1 (for DL),
- a UE or UE-group specific time domain adaptation by DRX and using the DCI format 2_6
- a UE-group-specific CSI-RS / TRS availability indication for IDLE/INACTIVE UEs by DCI format 2_7 and paging
- DCI-based PDCCH monitoring adaptation by PDCCH skipping and SSSG (Search Space Set Group) switching.

### Further improvements

In the above, the study item for XR was briefly presented. However, the current 5G NR releases cannot efficiently support the XR traffics, for example video streams. This is e.g. due to the non-integer periodicity of the video packets, the varying arrival of packets, the large and varying packet sizes and a mixture of different traffic streams.

In particular, in case of simultaneous data streams, e.g. in UL and DL, excessive resources may be required to be assigned for the UL transmissions. This results in higher UE power consumption, increased interference, and reduced capacity in the system.

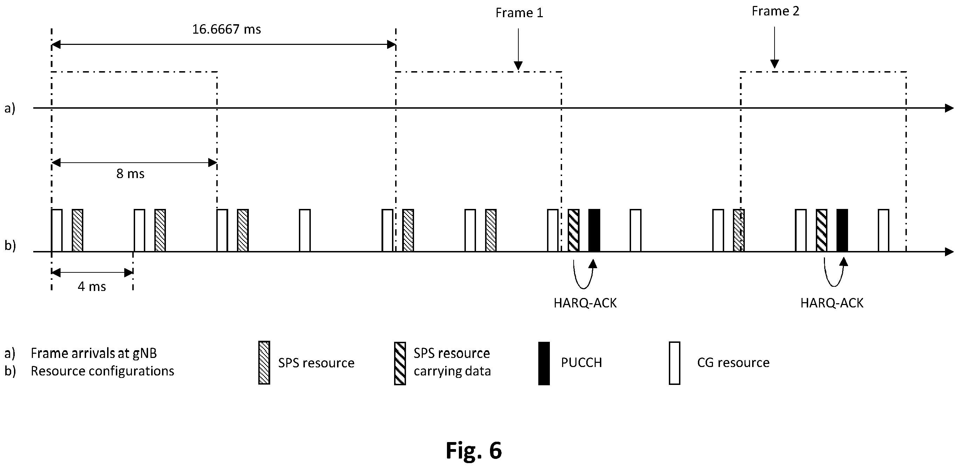

**Fig. 6** illustrates an example of SPS and CG configurations for simultaneous DL and DL data streams. For example, the video stream may be transmitted in DL and control traffic may be transmitted in UL. Specifically, frames of the video data are transmitted in SPS resources, whereas control traffic is transmitted in CG resources. The CG configuration exhibits a periodicity of 4 ms, whereas there are three SPS configurations, each exhibiting a periodicity of 16 ms. The SPS resources of the three SPS configurations further exhibit a temporal shift of 4 ms with respect to each other. The video to be transmitted has a framerate of 60 fps, resulting in a periodicity of the frames of 16.667 ms. The frames arrive within a time window of 8 ms width at gNB, as indicated by the dashed-dotted rectangles. The timing of the arrivals of the frames at gNB is indicated by vertical arrows ("Frame 1" and "Frame 2"). Respective data is transmitted in the subsequent SPS resources. After reception of SPS resources carrying data, a respective HARQ-ACK report (an example of an acknowledgement report) is transmitted in a dedicated PUCCH resource. Further, in CG resources, control data may be transmitted by the UE (not illustrated). That is, in the example illustrated in the figure, wherein DL and UL data transmissions frequently and simultaneously occur, the UE is required to transmit data and HARQ-ACK reports frequently.

The present disclosure provides solutions for transmission of acknowledgement reports like HARQ-ACK reports more efficiently, e.g. to support XR traffic.

However, XR, video, and the transmission of HARQ-ACK reports are only particular exemplary scenarios for which the above-described disadvantages exist. The present disclosure and its solutions do not only apply to XR, video streams and HARQ-ACK reports.

### Embodiments

The inventors have identified possibilities for providing improved procedures, for allowing to avoid one or more of the above-described disadvantages. The present disclosure relates to different solutions and variants for such improved procedures. Accordingly, the present disclosure provides techniques for increasing the efficiency of resource usage, in particular in scenarios with periodic traffic, such as XR traffic. Further, techniques are disclosed that allow supporting non-integer periodicities more efficiently.

The present disclosure in particular provides scheduling devices, corresponding methods for scheduling devices, user equipments (UEs), corresponding methods for user equipments, communications systems comprising such scheduling devices and user equipments, as well as integrated circuits which, in operation, control a processes of scheduling devices/user equipment to perform the respective methods

### Terminology

In the following, UEs, scheduling device and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit, a gateway or a scheduling device, for example. Further, in side link communication, a terminal may be adopted instead of a base station. The base station may be a relay apparatus that relays communication between a higher node and a terminal. The base station may be a roadside unit as well. A base station may be a scheduling node, a scheduling device or network node, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

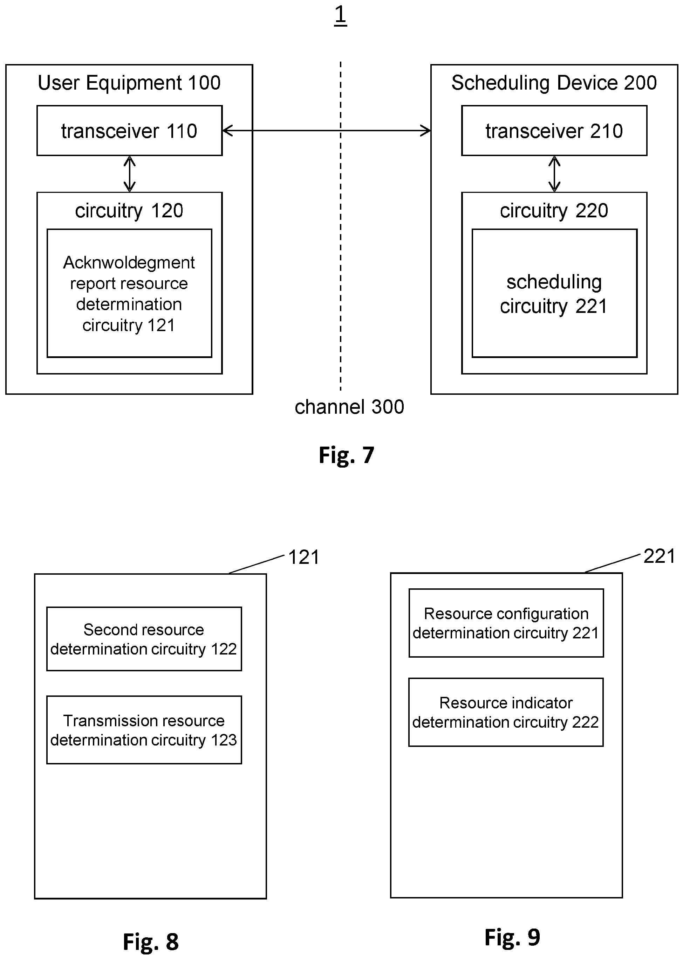

As already mentioned above, the present disclosure provides a scheduling device and a user equipment. The present disclosure further provides corresponding methods and programs. An example of such communication system is illustrated in **Fig. 7****.** The communication system 1 may be a wireless communication system in accordance with the technical specifications of 5G, in particular a NR communication system. However, the present disclosure is not limited to 3GPP NR and may also be applied to other wireless or cellular systems such as NTNs.

**Fig. 7** illustrates a general, simplified and exemplary block diagram of a user equipment 100 (also termed communication device) and a scheduling device 200 (here exemplarily assumed to be located in the base station, e.g. the LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the user equipment 100 may also be a sensor device, a wearable device, or a connected vehicle, or a controller of an automated machine in an industrial factory. Further, a user equipment may be able to function as a relay between scheduling device 200 and another communication device (e.g. the disclosure is not limited to communication "terminals" or user "terminals"). As illustrated in **Fig. 7****,** the UE 100 and the scheduling device 200 (eNB/gNB) may communicate with each other over a (wireless) physical channel 300 respectively using their transceivers 110 (UE side) and 210 (scheduling device side). Together, the scheduling device 200 and the user equipment 100 form the communication system 1. The communication system 1 may further include other entities such as those shown in Fig. 1. Communication between the UE and the scheduling device is typically standardized and may be defined by different layers, such as PHY, MAC, RRC etc. (see above background discussion).

As illustrated on the left side of **Fig. 7****,** a user equipment 100 may comprise a transceiver 110 and circuitry 120 (or processing circuitry), and a scheduling device 200 may comprise a transceiver 210 and a (processing) circuitry 330. The transceiver 110, 120 in turn may comprise and/or function as a receiver and a transmitter. In this disclosure, in other words, the term "transceiver" is used for hardware and software components that allow the user equipment 100, or, respectively scheduling device 200 to transmit and/or receive radio signals over a wireless channel. Accordingly, a transceiver corresponds to a receiver, a transmitter, or a combination of receiver and transmitter. Typically, a scheduling device and a user equipment are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, etc. The transmitter may be responsible for performing the process of transmitting and other processes related thereto. The receiver may be responsible for performing the process of receiving and other processes related thereto, such as monitoring a channel. A circuitry or processing circuitry may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a user equipment 100 as e.g. illustrated in **Fig. 7** is provided. The user equipment 100 comprises a transceiver 110 and circuitry 120. The circuity 110, in operation, receives a resource configuration indicating periodic downlink resources, wherein each downlink resource is associated with a respective first resource of a physical uplink control channel, PUCCH, for transmission of an acknowledgement report. Further, the transceiver 110 receives a resource indicator for determining a second resource for transmission of the acknowledgement report, and receives data via one of the downlink resources. The user equipment 100 further comprises circuitry 120 which, in operation, determines the second resource, using the resource indicator, and determines, from among the first resource associated with the one of the downlink resources and the second resource, the resource to be used for transmission of the acknowledgment report. The transceiver 110, in operation, transmits the acknowledgement report via the resource determined by the circuitry 120.

The circuitry 120 may implement more functionality than the above-mentioned obtaining and determining, as it may, for instance, further control the transceiver 110 to receive the control signalling and/or to receive or transmit data. Thus, the circuitry 120 is exemplarily considered to include acknowledgement report resource determination circuitry 121, which is configured to perform said obtaining and determining. The configuration may be provided by hardware adaption and/or by software.

**Fig. 8** shows an exemplary functional structure of the acknowledgement report resource determination circuitry 121. In particular, the acknowledgement report resource determination circuitry 121 may include resource determination circuitry 122, which may determine the second resource, using the resource indicator. The circuitry 121 may further include transmission resource determination circuitry 123, which may determine, from among the first resource associated with the one of the downlink resources and the second resource, the resource to be used for transmission of the acknowledgment report. It is noted that the acknowledgement report resource determination circuitry 121 may also implement more functionality.

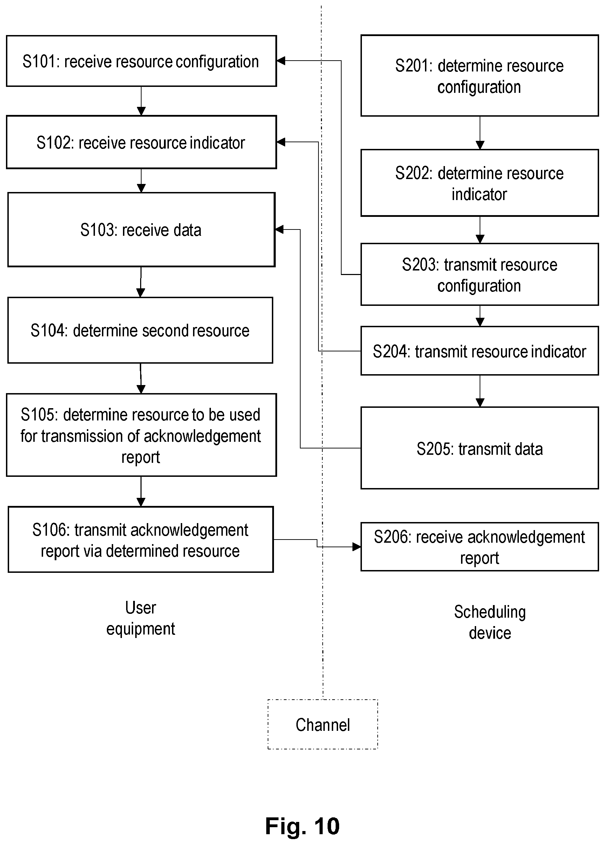

In correspondence with the above described UE, a method to be performed by a UE (or communication device) is provided. As shown in **Fig. 10****,** the method comprises the steps of (i) receiving S101 a resource configuration indicating periodic downlink resources, wherein a respective first resource of a physical uplink control channel, PUCCH, for transmission of an acknowledgement report is associated with each downlink resource, (ii) receiving S102 a resource indicator for determining a second resource for transmission of the acknowledgment report, (iii) receiving S103 data via one of the downlink resources, (iv) determining S104 the second resource, using the resource indicator, (v) determining S105, from among the first resource associated with the one of the downlink resources and the second resource, the resource to be used for transmission of the acknowledgement report, and (vi) transmitting S106 the acknowledgement report via the determined resource.

As also shown on the right side of **Fig. 7** (right-hand side), according to another exemplary embodiment, a scheduling device 200 is provided. The scheduling device 200 comprises a transceiver 210 and a circuitry 220. The circuitry 220, in operation, determines a resource configuration of periodic downlink resources, wherein a respective first resource of a physical uplink control channel, PUCCH, for transmission of an acknowledgement report is associated with each downlink resource. Further, the circuitry 220, in operation, determines a resource indicator for determining a second resource for transmission of the acknowledgement report. The transceiver 210, in operation, transmits the resource configuration, transmits the resource indicator, transmits data via one of the downlink resources, and receives an acknowledgement report via one of the first and the second resource

The circuitry 220 may implement more functionality than the above-mentioned obtaining, determining and generating, as it may, for instance, further control the transceiver 210 to transmit the control signalling and/or to receive or transmit data. Thus, the circuitry 220 is exemplarily considered to include scheduling circuitry 221, which is configured to perform said obtaining, determining and generating. The configuration may be provided by hardware adaption and/or by software.

An exemplary functional structure of the scheduling circuitry 221 is shown in **Fig. 9****.** In particular, the scheduling circuitry 210 may include resource configuration determination circuitry 221, which may determine the resource configuration, and resource indicator determination circuitry 220, which determined the resource indicator.

Furthermore, in correspondence with the above described scheduling device, a method to be performed by a scheduling device is provided. As shown in **Fig. 10****,** the method comprises a steps of (i) determining S201 a resource configuration of periodic downlink resources, wherein a respective first resource of a physical uplink control channel, PUCCH, for transmission of an acknowledgement report is associated with each downlink resource, (ii) determining S202 a resource indicator for determining a second resource for transmission of the acknowledgement report, (iii) transmitting S203 the resource configuration, (iv) transmitting S204 the resource indicator, (v) transmitting S205 data via one of the downlink resources, and (vi) receiving S206 an acknowledgement report via one of the first and the second resource.

It is further noted that any of the steps/operations described may be performed or controlled by the circuitry 110 (on the UE side) and/or the circuitry 210 (on the scheduling device). In the further description, the details and embodiments apply to each of the communication device (the UE), the scheduling device (or scheduling nodes) and the methods unless explicit statement or context indicates otherwise.

Moreover it is noted that, since the present disclosure relates to resource usage and scheduling, both entities, a user equipment (typically communication device/transceiver device) and scheduling device (typically network node) may take part.

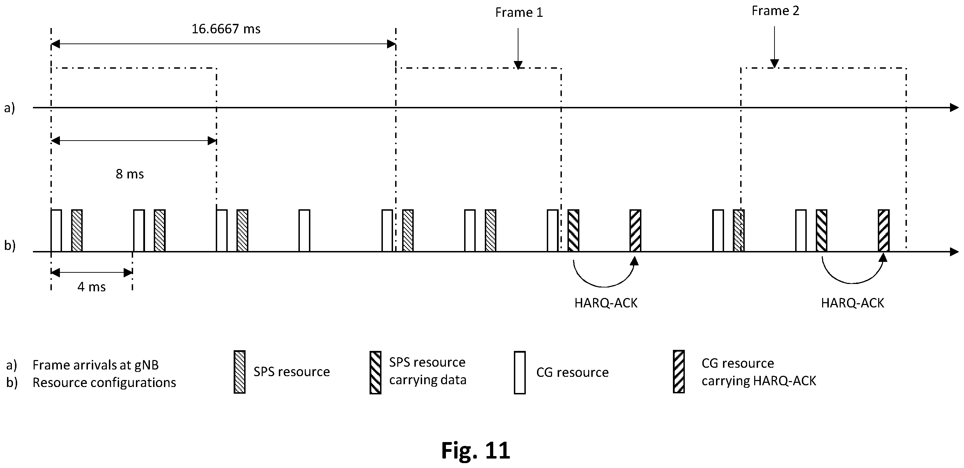

**Fig. 11** illustrates a process for transmitting an acknowledgement report according to an exemplary first embodiment.

In the process illustrated in the figure, the UE 100 transmits an HARQ-ACK report associated with reception of data via an SPS resource using a resource of a configured grant (CG), rather than a PUCCH resource associated with the transmission.

Specifically, similarly to the situation illustrated in Fig. 6, the UE 100 receives data of video frames (having a frame rate of 60 fps or a periodicity of 16.6667 ms), which are transmitted using SPS configured resources. The acknowledgement report (HARQ-ACK), however, is not transmitted using the associated PUCCH, but rather via CG resource.

For this purpose, the SPS configuration may include a resource indicator like a parameter, which indicates a CG configuration. However, the SPS configuration may include an indicator indicating a plurality of CG configurations. When data is received via a SPS resource according to such an SPS configuration, the HARQ-ACK is carried over a CG PUSCH resource of the indicated CG configuration (one of the indicated CG configurations). In this respect, it is to be noted that the periodicities of SPS and CG configurations may be different from one another. They may be integer or non-integer values with respect to the radio time unit (e.g. slot, min-slot, or symbol).

In the example illustrated in Fig. 11, the CG configuration is set with a periodicity of 4 ms for control frames in UL. Further, just as illustrated in Fig. 6, SPS configurations are set for DL traffic. As indicated by the SPS configuration, there is a link to a CG configuration (or a plurality thereof). Accordingly, the HARQ-ACK (an example of an acknowledgement report) is transmitted using one of the resources of the linked CG configuration. For example, the HARQ-ACK may be multiplexed with data to be transmitted on the CG PUSCH resource.

In a case where an SPS configuration is linked to a plurality of CG configurations, there may be a plurality of resources for transmission of the HARQ-ACK. One of said resources may be selected by the UE for transmission of the HQRQ-ACK. For example, the uplink resource may be determined as the resource for transmission of the acknowledgement report depending on the timings of the CG UL resources, a number of allocated resource element of the CG UL resources, and/or modulation and coding schemes, MCS, of the CG uplink resources.

For example, from among a plurality of linked CG UL resources, the UE 100 may select the earliest one. In other wording, from among the plurality of CG UL resources, the one appearing first after reception of the SPS resource carrying respective data may be selected as the resource for transmission of the HARQ-ACK.

Further, for example, from among a plurality of CG UL resources linked to the SPS configuration, the resource exhibiting the most resource elements may be selected as the resource for transmission of the HARQ-ACK. A resource element (RE) is the smallest unit of transmission resource, in both UL and DL. A RE may consist, for example, of 1 subcarrier in frequency domain for a duration of 1, Orthogonal Frequency Division Multiplexing (OFDM) or Single Carrier-Frequency Division Multiplexing (SC-FDM), symbol in the time domain.

The resource to be used for transmission of the HARQ-ACK may be selected depending on modulation and coding schemes of the CG UL resources. The modulation and coding scheme (MCS) encompasses the modulation order and code rate of a transmission. Therefore. MCS described the information data rate of a transmission. For example, from among the multiple resources, a resource having the lowest MCS may be selected for transmission of the HARQ-ACK.

By multiplexing the HARQ-ACKwith data over PUSCH CG, the UE 100 performs UL transmissions less frequently. Further, there is no need to reserve dedicated PUCCH resources for SPS HARQ-ACK reports.

In other words, the UE receives a resource configuration indicating periodic downlink resources, wherein each downlink resource is associated with a respective first resource of a physical uplink control channel, PUCCH, for transmission of an acknowledgement report. The resource configuration may be the SPS configuration in the example illustrated above. Respective periodic downlink resources may be the SPS DL resources according to said SPS configuration. Further, the UE receives a resource indicator for determining a second resource for transmission of the acknowledgement report. As in the above described example, the resource indicator may be included in the SPS configuration and may indicate the CG configuration. The UE then receives data via one of the downlink resources and determines the second resource, using the resource indicator. For example, a CG resource according to the indicated CG configuration is determined as the second resource. From among the first resource and the second resource, the UE determines a resource to be used for transmission of the acknowledgement report (e.g. the HARQ-ACK). In the example described above, the second resource, i.e. the CG resource is selected as the resource for transmission of the acknowledgement report, which is transmitted via the determined resource.

That is, for example, as indicated above, the resource configuration includes the resource indicator, which indicates a configuration of periodic uplink resources of a physical uplink shared channel, PUSCH. One of said periodic uplink resources is selected as the second resource and may be selected for transmission of the acknowledgement report.

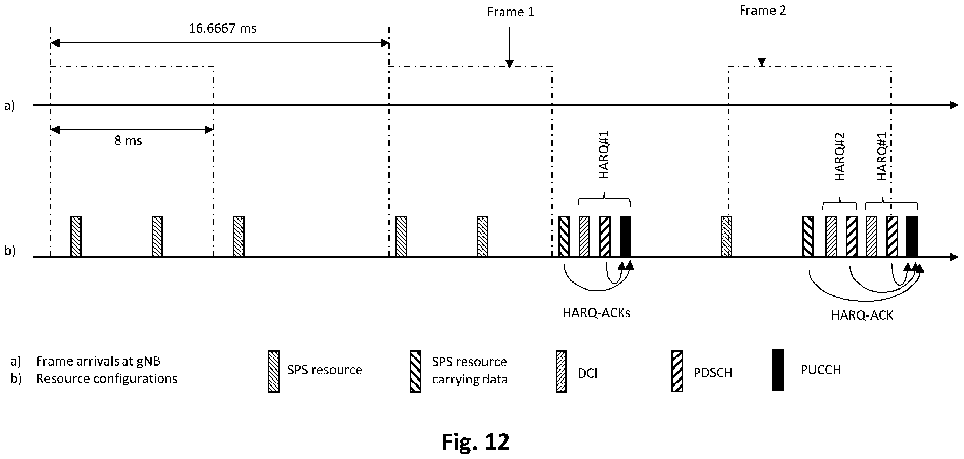

**Fig. 12** illustrates a process for transmitting an HARQ-ACK report according to an exemplary second embodiment. In the process illustrated in the figure, the UE 100 transmits an HARQ-ACK report associated with reception of data within an SPS resource using a resource associated with another HARQ-ACK process identifier.

Specifically, similarly to Fig. 6 and Fig. 11, the UE 100 receives data of video frames (having a frame rate of 60 fps or a periodicity of 16.6667 ms), which are transmitted using SPS configured resources. The acknowledgement report (HARQ-ACK), however, is not transmitted using the associated PUCCH, and also not using a CG resource, but a resource associated with another HARQ process.

The UE is configured with SPS DL resources for reception of video frames. In a case where a frame may not be transmitted using a single SPS DL resource, gNB may transmit a DCI indicating additional PDSCH resources that may carry the rest of the frames. For example, in the figure, Frame 1 is transmitted using an SPS resource and one additional PDSCH resource. Frame 2, on the other hand, is transmitted using one SPS resource and two further PDSCH resources, each being indicated by respective DCI. The UE 100 transmits respective HAQR-ACKs using one of the PDSCH resource.

For this purpose, an SPS configuration may include an indicator, e.g. a new parameter, indicating another HARQ process. The UE 100 transmits HARQ-ACKs using a resource of the indicated HARQ process. In the illustrated example, the SPS configuration may be linked with an HARQ process having the identifier #1. When the UE 100 receives data via an SPS resource, receives a DCI as well as further data via respective PDSCH resource associated with HARQ identifier #1, the HARQ-ACK regarding the transmission via the SPS resource as well as the transmission via the PDSCH resource according to the DCI are transmitted using respective PUCCH.

Further, in a case where the UE 100 receives data via an SPS resource, further data via a PDSCH indicated by first DCI associated with a HARQ process having an identifier #2, and further DCI and respective data via a PDSCH resource associated with a HARQ process having an identifier #2, as illustrated in the figure for Frame 2, the UE transmits the (three) HARQ-ACKs using the PUCCH resource associated with the HARQ #1 process.

As in the first embodiment, the HARQ-ACK for the SPS (and HARQ-ACKs for transmissions associated with HARQ #2) may be multiplexed with HARQ-ACK for HARQ #1.

In a case where multiple HARQ-ACKs are to be transmitted, the order of the HARQ-ACKs may be determined according to the resource type. For example, first, the HARQ-ACK of the SPS transmission and, then, the HARQ-ACK(s) of the dynamically scheduled resources may be transmitted, or vice versa. In another example, the HARQ-ACKs may be sorted according to their HARQ-ACK identifier (a number, for instance). In another example, the HARQ-ACKS may be sorted according to the timing of corresponding data reception.

In other words, the SPS configuration (an example of a resource configuration) further includes a resource indicator indicating a HARQ-process identifier (an example of a transmission process identifier). Further, the UE 100 receives downlink control information (DCI) indicating a resource for a dynamic downlink transmission and a resource for transmission of a respective acknowledgment report associated with the transmission process identifier. The UE 100 further receives data via the indicated resource for the dynamic downlink transmission. The indicated resource for transmission of the acknowledgement report according to the transmission process identifier associated with the dynamic downlink transmission is determined as the resource for transmission of the acknowledgement report.

The approach of the second embodiment is beneficial to support varying frame sizes, as additional resources may be dynamically scheduled for transmission of further frame data, wherein the UE 100 transmits HARQ-ACKs less frequently.

In the first and second embodiment, the HARQ-ACK for a transmission via an SPS resource is performed while not using respective PUCCH resource (an example of a first resource). However, the present disclosure is not limited thereto, and the circuitry may determine, from among said PUCCH resource (first resource) and a different resource (a second resource; for example, a CG resource as in embodiment 1 or a PUCCH resource associated with an indicated HARQ process identifier as in embodiment 2), the resource to be used for transmission of the acknowledgement report.

In the following, embodiments are described, wherein the UE 100 determines which of the first and the second resource is to be used for transmission of an acknowledgement report.

For example, the UE 100 may determine the second resource as the resource to be used for transmission, if a condition is satisfied, and determine the first resource as the resource to be used for transmission, if the condition is not satisfied.

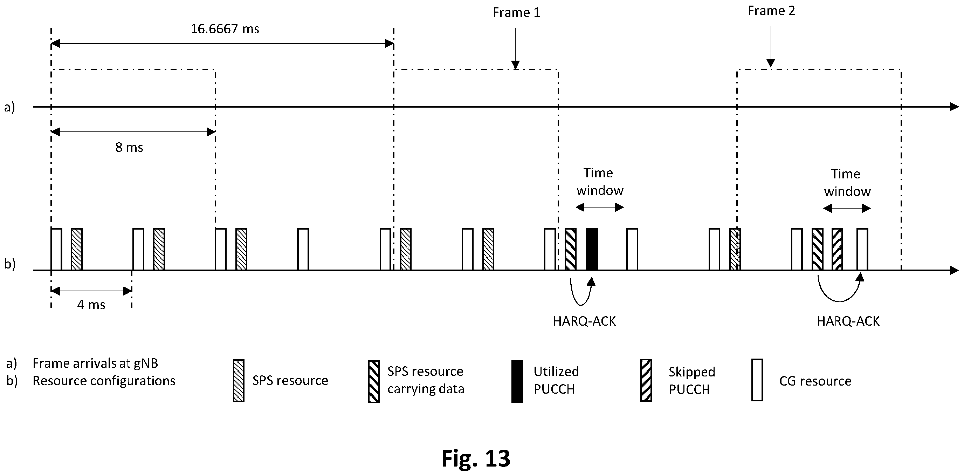

**Fig. 13** illustrates a process for transmitting an acknowledgement report according to an exemplary third embodiment. Similarly to the first embodiment illustrated in Fig. 11, the UE 100 may transmit an acknowledgement report associated with reception of data within an SPS resource using a resource of a configured grant CG, rather than a PUCCH resource associated with the SPS transmission. However, the UE 100 may transmit the acknowledgement report using said PUCCH resource under certain circumstances. In this embodiment, the determination of the resource to be used for transmission of the acknowledgement report is based on whether or not a linked CG resource exists within a time period extending from the reception timing of the data via the SPS resource for a certain period or not.

Specifically, the SPS configuration may indicate a dedicated PUCCH (e.g. n1PUCCH-AN). Further, the SPS configuration may include an indicator indicating a CG configuration (the linked CG configuration) and a timing window. In other words, the SPS configuration may include a time period indicator indicating the location and/or duration of a time window. The time window may extend from a reception timing of data via an SPS resource and last for an indicated or predetermined duration. However, the present disclosure is not limited thereto, and the start time of the time window may be set differently.

In the example illustrated in the figure, a CG configuration is set with a periodicity of 4 ms for UL traffic. For example, control frames may be transmitted by the UE 100 using respective CG resources. Further, SPS configurations are set for DL traffic, e.g. of video frames. Each SPS configuration contains a dedicated PUCCH resource for HARQ-ACK reports and is further linked to a CG configuration for transmission of HARQ-ACK reports.

In the illustrated example, the condition includes that the second resource exists within the indicated time period/time window. That is, for the transmission of data related to Frame 1, no CG resource of the linked CG configuration exists within the time period. Accordingly the HARQ-ACK is transmitted using the corresponding PUCCH resource. For Frame 2, the UE skips the dedicated PUCCH and transmits the HARQ-ACK over the CG PUSCH resource, because said CG PUSCH resource exits within the time window.

In other words, the UE determines the second resource as the resource to be used for transmission, if a condition is satisfied, and determines the first resource as the resource to be used for transmission, if the condition is not satisfied. For example, as described above, the resource configuration further includes a time period indicator indicating a time period and the condition includes that the second resource exists within the time period.

Further, the condition may include that there is further data to be transmitted via the linked CG resource (an example of the second resource). That is, the PUCCH may be skipped only when the UE 100 determines that the linked CG resource it to carry additional data. In contrast, the PUCCH may be determined as the resource for transmission of the acknowledgment report when said CG resource is not intended to carry any further data.

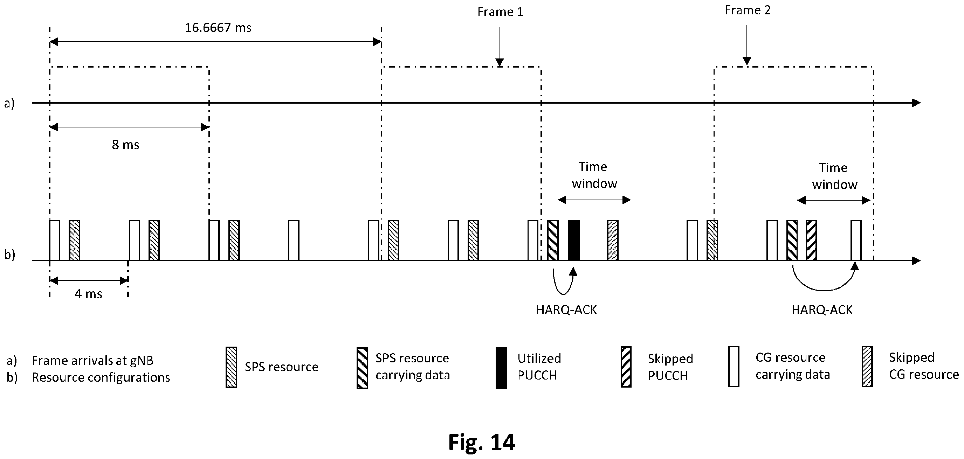

**Fig. 14** illustrates a process for transmitting an acknowledgement report according to a variation of the exemplary third embodiment, wherein for determining a validity of a CG resource for carrying a HARQ-ACK report it is considered whether the CG resource carries any further data or not. For example, the CG resource is considered valid if it carries further data and is considered not valid if it does not carry further data. The UE 100 uses the CG resource for transmitting an HARQ-ACK report only if it exists within the time window and, further, carries further data.

In the example illustrated in the figure, Frame 1 is received in an SPS resource. Although a CG resource exists within the indicated time window, it is not intended to carry any further data. Accordingly, the UE 100 utilizes the dedicated PUCCH for transmitting the HARQ-ACK report. On the other hand, for Frame 2, which is received via another SPS resource, a CG resource exists within the time window and carries further data. Thus, the UE 100 uses said CG resource to transmit the HARQ-ACK report and skips the dedicated PUCCH resource.

In other words, the condition includes that there is further data to be transmitted via the second resource.

It is to be noted that both described conditions may be applied (as in the variation of the third embodiment) or only one condition may be applied. That is, the linked CG resource may be used for transmission of the acknowledgement report in a case where it exists within a time period and/or there is further data to be transmitted via the CG resource.

The time window may be defined explicitly or implicitly by a timing relation. For example, the time duration may be defined by RRC or SPS activation. The time period may end before the start of the PUCCH resource or after the end of the PUCCH resource.

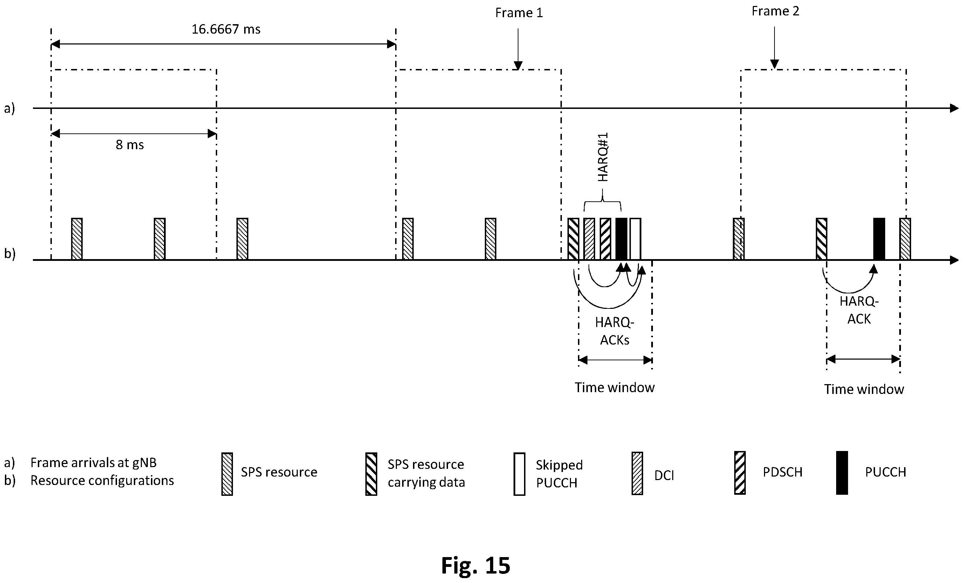

**Fig. 15** illustrates a process for transmitting an acknowledgement report according to an exemplary fourth embodiment. Similarly to the second embodiment illustrated in Fig. 12, the UE 100 may transmit an acknowledgement report associated with reception of data within an SPS resource associated with another transmission process identifier, rather than a PUCCH resource associated with the transmission via the SPS resource. However, the UE 100 may transmit the acknowledgement report using said PUCCH resource.

In this embodiment, the determination of the resource to be used for transmission of the acknowledgement report is based on whether or not another valid PUCCH resource exists within a time period (e.g. a time window) extending from the reception timing of the data via the SPS resource for a certain period.

Specifically, similarly to Fig. 12, the UE receives data of video frames (having a frame rate of 60 fps or a periodicity of 16.6667 ms), which are transmitted using SPS configured resources. The acknowledgement report (HARQ-ACK) may be transmitted using the associated PUCCH or a resource associated with another HARQ-ACK process.

The UE 100 is configured with SPS DL resources for reception of video frames. In a case where a frame may not be transmitted using a single SPS DL resource, gNB may transmit a DCI indicating an additional PDSCH resource that may carry the rest of the frames. For example, in the figure, Frame 1 is transmitted using an SPS resource and one further PDSCH resource, indicated by the respective DCI. To the contrary, Frame 2 is received in an SPS resource, not requiring an additional PDSCH transmission indicated by a respective DCI. The UE 100 may transmit respective HARQ-ACK reports either using the PUCCH resource associated with the PDSCH transmission or the PUCCH resource associated with the transmission via an SPS resource.

For this purpose, an SPS configuration may indicate, further to the dedicated PUCCH resource (e.g. n1PUCCH-AN) and a timing value (e.g., k1) a time period indictor indicating the time period (the time window). The dedicated PUCCH resource is skipped if there is a valid UL resource (an UL resource associated with the transmission process identifier, e.g. the HARQ process identifier) within said time period for transmitting the HARQ-ACK report associated with transmission via the SPS resource.

In the illustrated example, a PUCCH resource associated with HARQ-ACK with process identifier #1 (HARQ#1) exists in the time window of the SPS resource associated with transmission of Frame 1. Accordingly, the PUCCH resource associated with the transmission via the SPS resource is skipped and respective HARQ-ACK report is transmitted using the PUCCH resource of HARQ#1. On the other hand, for Frame 1, there is no valid UL resource for transmission of the HARQ-ACK report other than the dedicated PUCCH resource within the time window. Thus, the HARQ-ACK report is transmitted using the dedicated PUCCH resource.

In a case where the time window contains multiple potential UL resources for carrying the SPS HARQ-ACK report, one of said resources may be selected by the UE 100 for transmission of the HQRQ-ACK report. For example, the uplink resource is determined as the resource for transmission of the acknowledgement report depending on their timings, a number of allocated resource element of the resources, and/or modulation and coding schemes of the resources.

For example, from among a plurality of valid UL resources, the UE 100 may select the earliest one. In other wording, from among the plurality of valid UL resources, the one appearing first after reception of the SPS resource carrying respective data may be selected as the resource for transmission of the HARQ-ACK.

For example, from among a plurality of UL resources, the resource exhibiting the most resource elements may be selected as the resource for transmission of the HARQ-ACK.

Further, for example, the resource to be used for transmission of the HARQ-ACK may be selected depending on modulation and coding schemes of the valid UL resources.

It is to be noted that the time window may be defined explicitly or implicitly by a timing relation. For example, it may be defined by RRC or SPS (re)activation. Further, the time period may end before the start of a PUCCH resource or after the end of the PUCCH resource.

In other words, a resource configuration (e.g. an SPS configuration) may further include a time period indicator indicating a time period. The UE 100 may determine a resource of a PUCCH associated with a periodic downlink resource as a resource to be used for transmission of the acknowledgement report if another valid resource for transmission of the acknowledgement report does not exist within the time period. On the other hand, the UE 100 may determine another resource for transmission of the acknowledgement report if it exists within said time period.

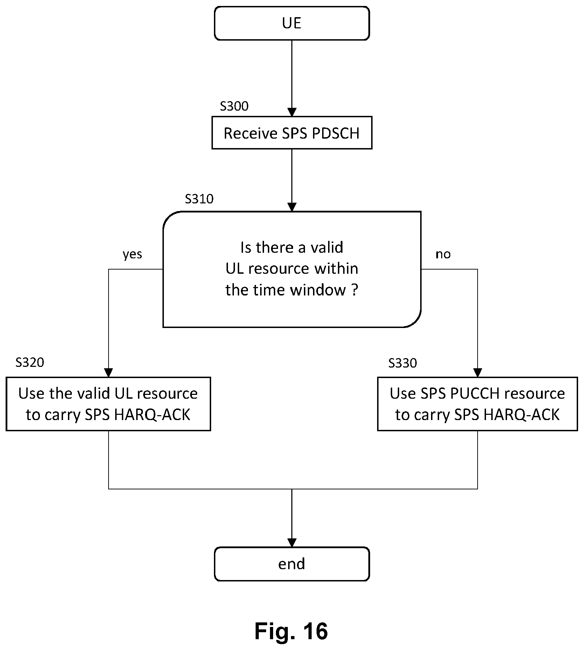

**Fig. 16** illustrates a flowchart of a method performed by a UE 100 according to the fourth embodiment. In step S310, UE 100 receives a transmission via a PDSCH resource of an SPS configuration. The SPS configuration includes a time indicator indicating a time period as described further above. In step S310, it is determined whether there is a valid UL resource within the time window. That is, it is determined whether there is an UL resource other than a dedicated PUCCH resource associated with the SPS PDSCH transmission. For example, said valid resource may be a PUCCH resource associated with a dynamically scheduled PDSCH transmission. In a case where there is a valid resource for transmission of the HARQ-ACK report in the time period/time window (yes in step S310), the UE uses said valid UL resource to carry the SPS HARQ-ACK report in step S320. On the other hand, in a case where there is no valid UL resource in the time period (no in step S310), the UE 100 transmits the HARQ-ACK report using the dedicated SPS PUCCH resource.

With this approach, the number of UL transmissions to be performed by the UE 100 may be reduced, as the UE 100 may skip the SPS PUCCH UL transmission and use another valid UL resource for carrying an acknowledgement report instead. This can achieve a lower power consumption for the UE 100.

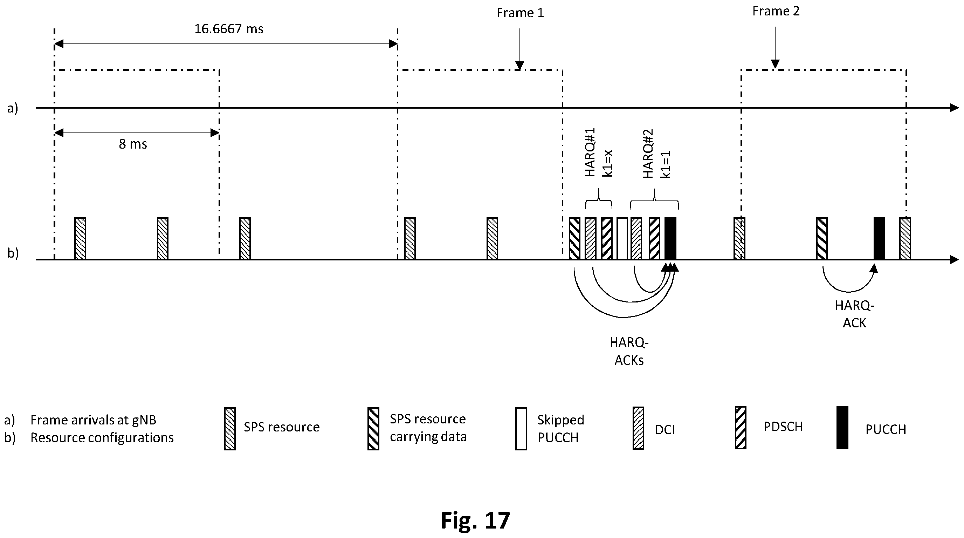

**Fig. 17** illustrates a process for transmitting an acknowledgement report according to an exemplary fifth embodiment, wherein transmissions of acknowledgement reports are suspended, e.g. by an indicator included in DCI. During suspension of the transmissions of acknowledgement reports, the UE 100 accumulates acknowledgment reports in order to be sent when transmission of the accumulated acknowledgement reports is indicated, e.g. by a DCI.

Specifically, a DCI carries a PDSCH-to-HARQ_feedback timing indicator (e.g. k1) that indicates the number of slots/mini-slots for transmitting the HARQ-ACK report on a dedicated PUCCH resource after the reception of a corresponding PDSCH. According to this example, the k1 value is mapped to the K1 set, which indicates the time delay between the PDSCH resource and the associated resource for transmission of the HARQ-ACK report. One of the k1 values (e.g. k1=x) may be used to indicate that HARQ-ACK reports are suspended.

In other words, a resource indicator included in a DCI may be a suspension indicator indicating a suspension of transmissions of acknowledgement reports. The UE 100 may not transmit acknowledgement reports after the suspension indicator is received and before a continuation indicator is received.

In the figure, SPS configurations are set for the DL traffic. Further, the timing indicator of k1=x is defined to suspend transmissions of HARQ-ACK reports. For Frame 1, the UE 100 received a portion of the frame via an SPS DL resource. Subsequently, the UE 100 received a DCI with k1=x, associated with HARQ#1. Accordingly, the UE 100 does not transmit HARQ-ACK reports. In contrast, the UE 100 accumulates HARQ-ACK reports as long as transmissions thereof are suspended. In another DCI (associated with HARQ#2), the UE 100 receives a DCI including k1=1 as a continuation indicator. Accordingly, the accumulated HARQ-ACK reports are transmitted in a PUCCH resource associated with HARQ#2, as indicated in respective DCI. On the other hand, Frame 2 is received using an SPS DL resource. A further DCI including a suspension indicator is not received. Accordingly, the UE 100 transmits the HARQ-ACK report using the dedicated PUCCH resource.

In the described embodiment, suspension of transmission is indicated by a resource indicator, which is a suspension indicator, which is realized using the k1 parameter. A continuation parameter is realized using the same parameter k1 in a different DCI. However, the present disclosure is not limited thereto, and the suspension and continuation indicators may be realized differently.

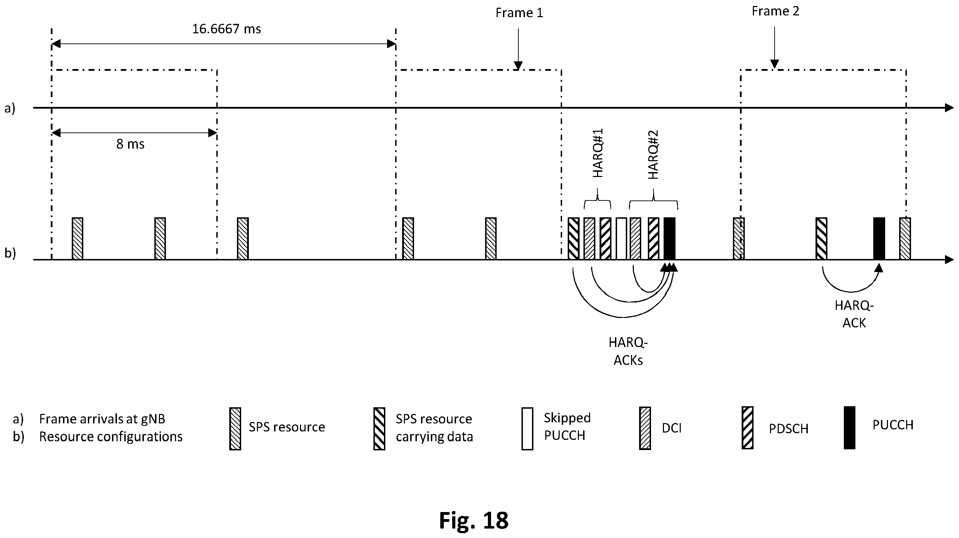

For example, in a variation illustrated in **Fig. 18****,** a HARQ-ACK process identifier (an example of a transmission process identifier) is used for indicating a suspension of transmissions of acknowledgement reports. Accordingly, another HARQ-ACK process identifier can be used as the continuation indicator.

In the example illustrated in the figure, SPS configurations are set for the UE 100 for DL traffic. The HARQ-ACK identifier #1 (HARQ#1) is defined as the suspension indicator to suspend transmissions of HARQ-ACK reports. Another HARQ-ACK identifier #2 (HARQ#2) is defined to serve as the continuation identifier.

In the illustrated example, Frame 1 is transmitted partially via an SPS resource. Further portions of the data are transmitted using dynamically configured downlink resources. Specifically, a DCI associated with HARQ#1 and respective data is received via a PDSCH resource indicated by said the DCI. As the DCI and respective PDSCH are associated with HARQ#1, a corresponding HARQ-ACK report is not transmitted by the UE 100. Subsequently, a further DCI is received and further data is received in the corresponding PDSCH. Said the DCI and PDSCH are associated with HARQ#2, indicating that transmissions of HARQ-ACK reports should be continued. Accordingly, the UE 100 transmits HARQ-ACK reports accumulated while transmission of HARQ-ACK reports were suspended using a PUCCH resource indicated by the second DCI associated with HARQ#2.

For Frame 2, no DCI associated with HARQ#1 or HARQ#2 is received by the UE 100 after reception of data of Frame 2 in an SPS resource. Accordingly, the transmission of HARQ-ACK reports is not suspended. The HARQ-ACK report is thus transmitted in the dedicated PUCCH resource associated with the SPS resource carrying Frame 2.

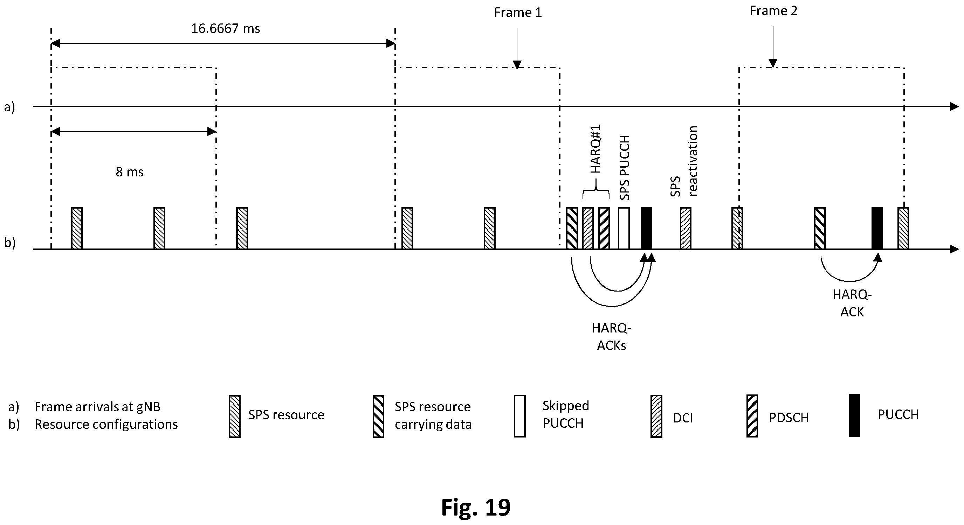

In a further variation, as illustrated in **Fig. 19****,** a DCI format may be used to indicate suspension and continuation of transmissions of acknowledgement reports. Any DCI type or format, for example dynamic scheduling, SPS activation, DCI 0_x, and DCI 1_x, may be used for this purpose.

In the example illustrated in the figure, the UE 100 is configured with SPS configurations for a DL stream. The UE 100 is configured to suspend transmissions of acknowledgement reports using a dedicated SPS PUCCH resource when a DCI scheduling DL resources is received. When the UE 100 receives an SPS (re)activation, transmissions of acknowledgement reports is continued.

For Frame 1, a portion of respective data is transmitted using an SPS resource. Subsequently, the UE 100 receives a DCI scheduling a PDSCH resource for further data transmission. Reception of the DCI triggers suspension of HARQ-ACK report transmission via SPS PUCCH resources. Accordingly, the UE 100 does not transmit the HARQ-ACK report associated with the transmission via the SPS resource. Rather, the UE accumulates said HARQ-ACK report and transmits said report together with the HARQ-ACK report associated with the PDSCH transmission according to the received DCI. Subsequently, an SPS reactivation is received by the UE 100, indicating that the UE 100 should continue sending HARQ-ACK reports using SPS PUCCH resources. Accordingly, for Frame 2, which is transmitted via an SPS resource, the UE transmits the respective HARQ-ACK report using the dedicated SPS PUCCH resource.

In a further variation, a new field is added to a DCI in order to indicate suspension or continuation of transmissions of acknowledgment reports using SPS PUCCH resources. In other words, rather than indicating suspension/continuation by DCI format or type, as performed in the previous variation, a DCI may include a further field including an indication of suspension or continuation.

One the UE 100 receives a DCI including a continuation indicator, the UE does not transmit acknowledgement reports using dedicated SPS PUCCH resources, but rather accumulates acknowledgement reports during a period, where transmissions of acknowledgement reports is suspended. When a DCI including a continuation indicator is received, the UE 100 resumes transmitting acknowledgment report using SPS PUCCH resources.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive

### Further aspects

According to a first aspect, provided is a user equipment, UE, comprising a transceiver which, in operation, receives a resource configuration indicating periodic downlink resources, wherein each downlink resource is associated with a respective first resource of a physical uplink control channel, PUCCH, for transmission of an acknowledgement report, receives a resource indicator for determining a second resource for transmission of the acknowledgement report, and receives data via one of the downlink resources. The UE further comprises circuitry which, in operation, determines the second resource, using the resource indicator, and determines, from among the first resource associated with the one of the downlink resources and the second resource, the resource to be used for transmission of the acknowledgment report. The transceiver, in operation, transmits the acknowledgement report via the resource determined by the circuitry

According to a second aspect, provided is a UE according to the first aspect, wherein the resource configuration includes the resource indicator, the resource indicator indicates a configuration of periodic uplink resources of a physical uplink shared channel, PUSCH; and the circuitry, in operation, determines one of the uplink resources as the second resource.

According to a third aspect, provided is a UE according to the second aspect, wherein the uplink resource is determined as the second resource, depending on timings of the uplink resources, a number of allocated resource elements of the uplink resources, and/or modulation and coding schemes of the uplink resources.

According to a fourth aspect, provided is a UE according to the second or the third aspect, wherein the circuitry, in operation, determines the second resource as the resource to be used for transmission of the acknowledgement report.

According to a fifth aspect, provided is a UE according to the second or the third aspect, wherein the circuitry, in operation, determines the second resource as the resource to be used for transmission, if a condition is satisfied, and determines the first resource as the resource to be used for transmission, if the condition is not satisfied.

According to a sixth aspect, provided is a UE according to the fifth aspect, wherein the resource configuration further includes a time period indicator indicating a time period; and the condition includes that the second resource exists within the time period.

According to a seventh aspect, provided is a UE according to the fifth or sixth aspect, wherein the condition includes that there is further data to be transmitted via the second resource.

According to an eighth aspect, provided is a UE according to the first aspect, wherein the resource configuration further includes the resource indicator and the resource indicator indicates a transmission process identifier. The transceiver, in operation, receives downlink control information indicating a resource for a dynamic downlink transmission and a resource for transmission of a respective acknowledgment report associated with the transmission process identifier, and receives data via the indicated resource for the dynamic downlink transmission. The circuitry, in operation, determines the indicated resource for transmission of the acknowledgement report according to the transmission process identifier associated with the dynamic downlink transmission as the second resource.

According to a ninth aspect, provided is a UE according to the eighth aspect, wherein the circuitry, in operation, determines the second resource as the resource to be used for transmission of the acknowledgment report.

According to a tenth aspect, provided is a UE according to the eighth aspect, wherein the resource configuration further includes a time period indicator indicating a time period. The circuitry, in operation, determines the second resource as the resource to be used for transmission of the acknowledgement report, if the second resource exists within the time period, and the first resource as the resource to be used for transmission of the acknowledgement report, if the second resource does not exist within the time period.

According to an eleventh aspect, provided is a UE according to any one of the eighth to tenth aspect, wherein, when there are multiple resources according to the transmission process identifiers associated with dynamic downlink transmissions, the resource according to the transmission process identifier is determined as the second resource, depending on timings of said resources, a number of allocated resource elements of said resources, and/or modulation and coding schemes of said resources.

According to a twelfth aspect, provided is a UE according to the first aspect, wherein the resource indicator is a suspension indicator indicating a suspension of transmissions of acknowledgement reports. The transceiver, in operation, receives a continuation indicator indicating a continuation of transmissions of acknowledgement reports. The circuitry, in operation, prevents the transceiver from transmitting acknowledgement reports, after the suspension indicator is received and before the continuation indicator is received, and determines the second resource, as the resource to be used for transmission of the acknowledgment report, further using the continuation indicator.

According to a thirteenth aspect, provided is a UE according to the twelfth aspect, wherein the circuitry, in operation, accumulates acknowledgement reports whose transmissions are prevented by the circuitry, and causes the transceiver to transmit the accumulated acknowledgement reports after the continuation indicator is received.

According to a fourteenth aspect, provided is a method for a user equipment, UE, comprising the steps of receiving a resource configuration indicating periodic downlink resources, wherein a respective first resource of a physical uplink control channel, PUCCH, for transmission of an acknowledgement report is associated with each downlink resource; receiving a resource indicator for determining a second resource for transmission of the acknowledgment report; receiving data via one of the downlink resources; determining the second resource, using the resource indicator; determining, from among the first resource associated with the one of the downlink resources and the second resource, the resource to be used for transmission of the acknowledgement report; and transmitting the acknowledgement report via the determined resource.

According to a fifteenth aspect, provided is a method according to fourteenth aspect, wherein the resource configuration includes the resource indicator, the resource indicator indicates a configuration of periodic uplink resources of a physical uplink shared channel, PUSCH; and the method further comprises the step of determining one of the uplink resources as the second resource.

According to a sixteenth aspect, provided is a method according to the fifteenth aspect, wherein the uplink resource is determined as the second resource, depending on timings of the uplink resources, a number of allocated resource elements of the uplink resources, and/or modulation and coding schemes of the uplink resources.

According to a seventeenth aspect, provided is a UE according to the fifteenth or the sixteenth aspect, wherein the method further comprises the step of determining the second resource as the resource to be used for transmission of the acknowledgement report.

According to an eighteenth aspect, provided is a method according to the fifteenth or the sixteenth aspect, wherein the method further comprises the steps of determining the second resource as the resource to be used for transmission, if a condition is satisfied, and determining the first resource as the resource to be used for transmission, if the condition is not satisfied.

According to a nineteenth aspect, provided is a method according to the eighteenth aspect, wherein the resource configuration further includes a time period indicator indicating a time period; and the condition includes that the second resource exists within the time period.

According to a twentieth aspect, provided is a method according to the eighteenth or nineteenth aspect, wherein the condition includes that there is further data to be transmitted via the second resource.

According to a twenty-first aspect, provided is a method according to the fourteenth aspect, wherein the resource configuration further includes the resource indicator and the resource indicator indicates a transmission process identifier. The method further comprises the steps of receiving downlink control information indicating a resource for a dynamic downlink transmission and a resource for transmission of a respective acknowledgment report associated with the transmission process identifier, and receiving data via the indicated resource for the dynamic downlink transmission. Further, the method comprises the step of determining the indicated resource for transmission of the acknowledgement report according to the transmission process identifier associated with the dynamic downlink transmission as the second resource.

According to a twenty-second aspect, provided is a method according to the twenty-first aspect, wherein the method further comprises the step of determining the second resource as the resource to be used for transmission of the acknowledgment report.

According to a twenty-third aspect, provided is a method according to the twenty-first aspect, wherein the resource configuration further includes a time period indicator indicating a time period.

The method further comprises the step of determining the second resource as the resource to be used for transmission of the acknowledgement report, if the second resource exists within the time period, and the first resource as the resource to be used for transmission of the acknowledgement report, if the second resource does not exist within the time period.

According to a twenty-fourth aspect, provided is a method according to any one of the twenty-first to twenty-third aspect, wherein, when there are multiple resources according to the transmission process identifiers associated with dynamic downlink transmissions, the resource according to the transmission process identifier is determined as the second resource, depending on timings of said resources, a number of allocated resource elements of said resources, and/or modulation and coding schemes of said resources.

According to a twenty-fifth aspect, provided is a method according to the fourteenth aspect, wherein the resource indicator is a suspension indicator indicating a suspension of transmissions of acknowledgement reports. The method further comprises the steps of receiving a continuation indicator indicating a continuation of transmissions of acknowledgement reports, preventing the a transmission of acknowledgement reports, after the suspension indicator is received and before the continuation indicator is received, and determining the second resource, as the resource to be used for transmission of the acknowledgment report, further using the continuation indicator.

According to a twenty-sixth aspect, provided is a method according to the twenty-fifth aspect, wherein the method further comprises the steps of accumulating acknowledgement reports whose transmissions are prevented, and transmitting the accumulated acknowledgement reports after the continuation indicator is received.

According to a twenty-seventh aspect, provided is a scheduling device, comprising circuitry which, in operation, determines a resource configuration of periodic downlink resources, wherein a respective first resource of a physical uplink control channel, PUCCH, for transmission of an acknowledgement report is associated with each downlink resource, and determines a resource indicator for determining a second resource for transmission of the acknowledgement report. The scheduling device further comprises a transceiver which, in operation, transmits the resource configuration, transmits the resource indicator, transmits data via one of the downlink resources, and receives an acknowledgement report via one of the first and the second resource.

According to a twenty-eighth aspect, provided is a scheduling device according to the twenty-seventh aspect, wherein the resource configuration includes the resource indicator, the resource indicator indicates a configuration of periodic uplink resources of a physical uplink shared channel, PUSCH.

According to a twenty-ninth aspect, provided is a scheduling device according to the twenty-eighth aspect, wherein the acknowledgement report is received via one of the uplink resources as the second resource.

According to a thirtieth aspect, provided is a scheduling device according to the twenty-seventh aspect, wherein the acknowledgement report is received via the second resource if a condition is satisfied, and the acknowledgement report is received via the first resource if the condition is not satisfied.

According to a thirty-first aspect, provided is a scheduling device according to the thirtieth aspect, wherein the resource configuration further includes a time period indicator indicating a time period; and the condition includes that the second resource exists within the time period.

According to a thirty-second aspect, provided is a scheduling device according to the thirtieth or thirty-first aspect, wherein the condition includes that there is further data to be received via the second resource.

According to a thirty-second aspect, provided is a scheduling device according to the twenty-seventh aspect, wherein the resource configuration further includes the resource indicator and the resource indicator indicates a transmission process identifier. The transceiver, in operation, transmits downlink control information indicating a resource for a dynamic downlink transmission and a resource for transmission of a respective acknowledgment report associated with the transmission process identifier, and transmits data via the indicated resource for the dynamic downlink transmission.

According to a thirty-third aspect, provided is a scheduling device according to the thirty-second aspect, wherein the transceiver, in operation, receives the acknowledgement report via the indicated resource for transmission of the acknowledgement report according to the transmission process identifier associated with the dynamic downlink transmission as the second resource

According to a thirty-fourth aspect, provided is a scheduling device according to the thirty-second aspect, wherein the resource configuration further includes a time period indicator indicating a time period. The transceiver, in operation, receives the acknowledgement report via the indicated resource for transmission of the acknowledgement report according to the transmission process identifier associated with the dynamic downlink transmission as the second resource, if the second resource exists within the time period. The transceiver, in operation, receives the acknowledgement report via the first resource, if the second resource does not exist within the time period.

According to an thirty-fifth aspect, provided is a scheduling device according to any one of the thirty-second to thirty-fourth aspect, wherein, when there are multiple resources according to the transmission process identifiers associated with dynamic downlink transmissions, the resource according to the transmission process identifier is determined as the second resource, depending on timings of said resources, a number of allocated resource elements of said resources, and/or modulation and coding schemes of said resources.

According to a thirty-sixth aspect, provided is a scheduling device according to the twenty-seventh aspect, wherein the resource indicator is a suspension indicator indicating a suspension of transmissions of acknowledgement reports. The transceiver, in operation, transmits a continuation indicator indicating a continuation of transmissions of acknowledgement reports. The transceiver, in operation, receives acknowledgement reports, after the continuation indicator is transmitted.

According to a thirty-seventh aspect, provided is a method for a scheduling device, comprising the steps of determining a resource configuration of periodic downlink resources, wherein a respective first resource of a physical uplink control channel, PUCCH, for transmission of an acknowledgement report is associated with each downlink resource, and determining a resource indicator for determining a second resource for transmission of the acknowledgement report. The method further comprises the steps of transmitting the resource configuration, transmitting the resource indicator, transmitting data via one of the downlink resources, and receiving an acknowledgement report via one of the first and the second resource.

According to a thirty-eighth aspect, provided is a method according to the thirty-seventh aspect, wherein the resource configuration includes the resource indicator, the resource indicator indicates a configuration of periodic uplink resources of a physical uplink shared channel, PUSCH.

According to a thirty-ninth aspect, provided is a method according to the thirty-eighth aspect, wherein the acknowledgement report is received via one of the uplink resources as the second resource.

According to a fortieth aspect, provided is a method according to the thirty-seventh aspect, wherein the acknowledgement report is received via the second resource if a condition is satisfied, and the acknowledgement report is received via the first resource if the condition is not satisfied.

According to a forty-first aspect, provided is a method according to the fortieth aspect, wherein the resource configuration further includes a time period indicator indicating a time period; and the condition includes that the second resource exists within the time period.

According to a forty-second aspect, provided is a method according to the fortieth or forty-first aspect, wherein the condition includes that there is further data to be received via the second resource.

According to a forty-second aspect, provided is a method according to the thirty-seventh aspect, wherein the resource configuration further includes the resource indicator and the resource indicator indicates a transmission process identifier. The method further comprises the steps of transmitting downlink control information indicating a resource for a dynamic downlink transmission and a resource for transmission of a respective acknowledgment report associated with the transmission process identifier, and transmitting data via the indicated resource for the dynamic downlink transmission.

According to a forty-third aspect, provided is a method according to the forty-second aspect, wherein the method further comprises the step of receiving the acknowledgement report via the indicated resource for transmission of the acknowledgement report according to the transmission process identifier associated with the dynamic downlink transmission as the second resource

According to a forty-fourth aspect, provided is a method according to the forty-second aspect, wherein the resource configuration further includes a time period indicator indicating a time period. The method further comprises the steps of receiving the acknowledgement report via the indicated resource for transmission of the acknowledgement report according to the transmission process identifier associated with the dynamic downlink transmission as the second resource, if the second resource exists within the time period, and receiving the acknowledgement report via the first resource, if the second resource does not exist within the time period.

According to an forty-fifth aspect, provided is a method according to any one of the forty-second to forty-fourth aspect, wherein, when there are multiple resources according to the transmission process identifiers associated with dynamic downlink transmissions, the resource according to the transmission process identifier is determined as the second resource, depending on timings of said resources, a number of allocated resource elements of said resources, and/or modulation and coding schemes of said resources.

According to a forty-sixth aspect, provided is a method according to the thirty-seventh aspect, wherein the resource indicator is a suspension indicator indicating a suspension of transmissions of acknowledgement reports. The method further comprises the steps of transmitting a continuation indicator indicating a continuation of transmissions of acknowledgement reports, and receiving acknowledgement reports, after the continuation indicator is transmitted.

Summarizing, some exemplary embodiments relate to a user equipment, UE, a scheduling device and respective methods for a UE and a scheduling device. For example, the UE comprises a transceiver which, in operation, receives a resource configuration indicating periodic downlink resources, wherein each downlink resource is associated with a respective first resource of a physical uplink control channel, PUCCH, for transmission of an acknowledgement report, receives a resource indicator for determining a second resource for transmission of the acknowledgement report, and receives data via one of the downlink resources. The UE, for example, further comprises circuitry which, in operation, determines the second resource, using the resource indicator, and determines, from among the first resource associated with the one of the downlink resources and the second resource, the resource to be used for transmission of the acknowledgment report, wherein the transceiver, in operation, transmits the acknowledgement report via the resource determined by the circuitry.

## Claims

1. A user equipment, UE, comprising
a transceiver which, in operation,
receives a resource configuration indicating periodic downlink resources, wherein each downlink resource is associated with a respective first resource of a physical uplink control channel, PUCCH, for transmission of an acknowledgement report,
receives a resource indicator for determining a second resource for transmission of the acknowledgement report, and
receives data via one of the downlink resources; and
circuitry which, in operation,
determines the second resource, using the resource indicator, and
determines, from among the first resource associated with the one of the downlink resources and the second resource, the resource to be used for transmission of the acknowledgment report, wherein
the transceiver, in operation, transmits the acknowledgement report via the resource determined by the circuitry.

2. The UE according to claim 1, wherein
the resource configuration includes the resource indicator,
the resource indicator indicates a configuration of periodic uplink resources of a physical uplink shared channel, PUSCH; and
the circuitry, in operation, determines one of the uplink resources as the second resource.

3. The UE according to claim 2, wherein
the uplink resource is determined as the second resource, depending on timings of the uplink resources, a number of allocated resource elements of the uplink resources, and/or modulation and coding schemes of the uplink resources.

4. The UE according to claim 2 or 3, wherein
the circuitry, in operation, determines the second resource as the resource to be used for transmission of the acknowledgement report.

5. The UE according to claim 2 or 3, wherein
the circuitry, in operation,
determines the second resource as the resource to be used for transmission, if a condition is satisfied, and
determines the first resource as the resource to be used for transmission, if the condition is not satisfied.

6. The UE according to claim 5, wherein
the resource configuration further includes a time period indicator indicating a time period; and
the condition includes that the second resource exists within the time period.

7. The UE according to claim 5 or 6, wherein
the condition includes that there is further data to be transmitted via the second resource.

8. The UE according to claim 1, wherein
the resource configuration further includes the resource indicator,
the resource indicator indicates a transmission process identifier,
the transceiver, in operation,
receives downlink control information indicating a resource for a dynamic downlink transmission and a resource for transmission of a respective acknowledgment report associated with the transmission process identifier, and
receives data via the indicated resource for the dynamic downlink transmission; and
the circuitry, in operation, determines the indicated resource for transmission of the acknowledgement report according to the transmission process identifier associated with the dynamic downlink transmission as the second resource.

9. The UE according to claim 8, wherein
the circuitry, in operation, determines the second resource as the resource to be used for transmission of the acknowledgment report.

10. The UE according to claim 8, wherein
the resource configuration further includes a time period indicator indicating a time period; and
the circuitry, in operation, determines
the second resource as the resource to be used for transmission of the acknowledgement report, if the second resource exists within the time period, and
the first resource as the resource to be used for transmission of the acknowledgement report, if the second resource does not exist within the time period.

11. The UE according to any one of claims 8 to 10, wherein
when there are multiple resources according to the transmission process identifiers associated with dynamic downlink transmissions, the resource according to the transmission process identifier is determined as the second resource, depending on timings of said resources, a number of allocated resource elements of said resources, and/or modulation and coding schemes of said resources.

12. The UE according to claim 1, wherein
the resource indicator is a suspension indicator indicating a suspension of transmissions of acknowledgement reports;
the transceiver, in operation, receives a continuation indicator indicating a continuation of transmissions of acknowledgement reports;
the circuitry, in operation,
prevents the transceiver from transmitting acknowledgement reports, after the suspension indicator is received and before the continuation indicator is received, and
determines the second resource, as the resource to be used for transmission of the acknowledgment report, further using the continuation indicator.

13. The UE according to claim 12, wherein
the circuitry, in operation,
accumulates acknowledgement reports whose transmissions are prevented by the circuitry, and
causes the transceiver to transmit the accumulated acknowledgement reports after the continuation indicator is received.

14. A method for a user equipment, UE, comprising the steps of
receiving a resource configuration indicating periodic downlink resources, wherein a respective first resource of a physical uplink control channel, PUCCH, for transmission of an acknowledgement report is associated with each downlink resource;
receiving a resource indicator for determining a second resource for transmission of the acknowledgment report;
receiving data via one of the downlink resources;
determining the second resource, using the resource indicator;
determining, from among the first resource associated with the one of the downlink resources and the second resource, the resource to be used for transmission of the acknowledgement report; and
transmitting the acknowledgement report via the determined resource.

15. A scheduling device, comprising
circuitry which, in operation,
determines a resource configuration of periodic downlink resources, wherein a respective first resource of a physical uplink control channel, PUCCH, for transmission of an acknowledgement report is associated with each downlink resource, and
determines a resource indicator for determining a second resource for transmission of the acknowledgement report; and
a transceiver which, in operation,
transmits the resource configuration,
transmits the resource indicator,
transmits data via one of the downlink resources, and
receives an acknowledgement report via one of the first and the second resource.
